(19) Europäisches Patentamt
European Patent Office
Office européen des brevets

(11) EP 1 984 460 B1

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **07703465.0**

(22) Anmeldetag: **14.02.2007**

(51) Int Cl.:
*C09C 1/62* (2006.01) *C09C 1/64* (2006.01)
*C09C 1/00* (2006.01) *C09C 1/40* (2006.01)

(86) Internationale Anmeldenummer:
**PCT/EP2007/001280**

(87) Internationale Veröffentlichungsnummer:
**WO 2007/093401 (23.08.2007 Gazette 2007/34)**

(54) **DUNKLE METALLISCHE EFFEKTPIGMENTE HERGESTELLT DURCH PVD-VERFAHREN**

DARK METAL EFFECT PIGMENTS PRODUCED BY MEANS OF A PHYSICAL VAPOUR DEPOSITION (PVD) METHOD

PIGMENTS À EFFET MÉTALLIQUE FONCÉS PRODUITS AU MOYEN D'UN PROCÉDÉ DE DÉPÔT PHYSIQUE EN PHASE VAPEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2006 DE 102006007151**

(43) Veröffentlichungstag der Anmeldung:
**29.10.2008 Patentblatt 2008/44**

(73) Patentinhaber: **Eckart GmbH**
**91235 Hartenstein (DE)**

(72) Erfinder:
- **GEISSLER, Bernhard**
  **90592 Schwarzenbruck (DE)**
- **FISCHER, Martin**
  **92281 Königstein (DE)**
- **HERZING, Wolfgang**
  **91233 Neunkirchen (DE)**
- **SCHNEIDER, Ralph**
  **91207 Lauf a. d. Pegnitz (DE)**

(74) Vertreter: **LOUIS, PÖHLAU, LOHRENTZ**
**Patentanwälte**
**Postfach 30 55**
**90014 Nürnberg (DE)**

(56) Entgegenhaltungen:

**EP-A- 1 522 606**
**EP-A2- 0 481 460**
**DE-A1- 10 151 375**
**FR-A- 2 151 636**
**US-A- 3 078 149**
**US-A- 5 766 827**
**US-A1- 2001 036 056**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Seit längerer Zeit sind Metallpigmente, die durch PVD-Verfahren hergestellt werden, bekannt. Sie zeichnen sich durch extrem hohen Glanz, ein enormes Deckvermögen und einzigartige optische Eigenschaften aus. Bedingt durch ihre geringe Dicke (ca. 30 bis 70 nm) und ihre extrem glatten Oberflächen neigen sie dazu, sich nach ihrer Applikation sehr dicht an ihren Untergrund anzuschmiegen. Dies führt bei einem sehr glatten Untergrund nahezu zu einem spiegelähnlichen Erscheinungsbild.

Kommerziell sind bisher von den reinen Metallpigmenten lediglich Aluminiumpigmente bekannt geworden. Beispiele hierfür sind Metalure® (hergestellt von der Fa. Avery Dennison, vertrieben von Fa. ECKART), Decornet® (Fa. Schlenk) oder Metasheen® (Fa. Ciba).

Derartige Pigmente stehen für den Farbton "Silber" in seiner höchsten Ausführungsform.

Derartig über PVD-Verfahren hergestellte Pigmente auf Basis metallischer Schichten werden in der US 2,839,378 "Method of making metal flakes" näher beschrieben. Dabei wird die Herstellung spiegelähnlicher Pigmente mit extrem dünnen Schichtdicken beschrieben, die auf ein Substrat aufgedampft werden, welches mit einem "release layer" versehen ist. Nach der Aufbringung der Metallschichten und Ablösung des Films werden die. Pigmente mittels mechanischer Beanspruchung auf die gewünschte Teilchengröße zerkleinert.

Die Anwendung derartig hergestellter Pigmente in coating-Formulierungen wird detailliert in US 2,941,894 "Metallised coating compositions" beschrieben. Dabei werden hohe Reflektivitäten, die niedrige Pigmentierungshöhe und das hohe Deckvermögen der Pigmente hervorgehoben.

Der Prozess zur Herstellung von metallischen Pigmenten mittels Aufdampfverfahren mit einer Dicke von 35 bis 45 nm wird in US 4,321,087 genauer beschrieben und beinhaltet das Aufbringen eines Release coats, den Metallisierungsprozess, den Ablöseprozess in einem Lösemittelbad, die Aufkonzentration der Partikel und die Ultraschallzerkleinerung auf die gewünschte Pigmentgröße.

In der Patentanmeldung PCT/US99/24782 der Fa. Avery wird die Möglichkeit eines Mehrschichtaufbaus, bestehend aus Lagen von Pigmentmaterial und Releasecoat-Schichten, beschrieben, und in der PCT/US02/14161 wird ein Verfahren, wie der Prozess der kontinuierlichen Beschichtung über eine externe Zuführung von Releasecoat-Material mittels eines mit Polymer beschichteten Drahts effektiver gestaltet werden kann, offenbart. Die PCT/US02/38292 offenbart die Möglichkeit einer kombinierten Beschichtungs- und Ablöseeinheit, die voneinander getrennt, beide unterhalb des atmosphärischen Drucks arbeiten.

Die WO2004/026971 und WO2004/026972 befassen sich mit hochglänzenden goldfarbenen Metalleffektpigmenten, die aus einer kupferbasierenden Legierung und weiteren metallischen Legierungsbestandteilen bestehen und durch Ablösen und Zerkleinern von im Vakuum abgeschiedenen Metallfilmen hergestellt werden.

Ebenso sind metallisch glänzende Pigmente, deren Farbigkeit auf Interferenz beruht und die einen Mehrschichtaufbau aufweisen, seit geraumer Zeit bekannt. Diesen Pigmenten liegt als optisches Prinzip der Fabry-Perot Interferenzeffekt zugrunde. Dabei handelt es sich generell um alternierende Schichten aus Dielektrika und metallischen Schichten. Die Pigmente weisen außerordentlich hohe Farbflops auf.

Ein großer Nachteil dieser Pigmente ist auf Grund des Mehrschichtaufbaus ihre erhebliche Partikeldicke. Dies führt zwangsläufig zu einer verminderten Ergiebigkeit bzw. zu vermindertem Deckvermögen.

Alle aus den vorstehenden Schriften bekannten Effektpigmente weisen den Nachteil auf, das sie als Metallpigmente nur einen silbernen oder goldenen oder im Fall von Interferenzpigmenten einen optisch variablen Farbeindruck vermitteln.

Es gibt jedoch einen zunehmenden Bedarf an edlen schwarzen oder grauen Effekten. So sind beispielsweise in der Automobilindustrie schwarze oder graue Effektlacke sehr gefragt. Diese werden hergestellt aus einer Mischung aus üblichen Schwarzpigmenten wie beispielsweise Rußpigmenten und konventionellen Metallpigmenten, insbesondere Aluminiumpigmenten. Unter konventionellen Metallpigmenten werden jene verstanden, die durch Mahlverfahren erhalten werden. Man unterscheidet hier beispielsweise "cornflake" und "Silberdollar"-Typen.

Es hat nicht an Versuchen gefehlt, das Spektrum an schwarzen Effektpigmenten zu erhöhen. So sind beispielsweise aus der DE 103 46 167 A1 glänzende schwarze Interferenzpigmente bekannt, die eine Beschichtung aus Magnetit und einer farblosen Beschichtung mit einem Brechungsindex $n < 1{,}8$ aufweisen. Diese Pigmente lassen jedoch die Deckkraft metallischer Pigmente sowie den typischen metallischen Flop vermissen.

Schließlich ist aus der EP 1 522 606 A1 ein Verfahren zur Herstellung einer schwarzen Aluminiumoxidfolie bekannt. Diese wird vorwiegend für Lasermarkierungszwecke eingesetzt. Hierbei sind metallische Eigenschaften wie hoher Glanz unerwünscht und werden durch eine gezielte Nachoxidation vermieden. Diese Schritt offenbart keine Effektpigmente.

Weiterhin sind aus der WO 2005/064035 A1 dünne Plättchen aus einem dielektrischen Stoff offenbart Bei diesen Stoffen handelt es sich jedoch nicht um Materialien mit metallischen Eigenschaften.

Die US 2001/0036056 A1 betrifft die Bereitstellung einer Nioboxid-haltigen Kondensatoranode sowie ein Verfahren zu deren Herstellung.

Die FR 2.151.636 betrifft ein Verfahren zur Herstellung von Germanium-, Titan-, Zirkonium- und Haffnium-Monoxiden.

Die US 3,078,149 betrifft ein Verfahren zur Herstellung von Titanmonoxid bzw, Titancarbid.

Die DE 101 513 75 A1 betrifft ein Verfahren zur Herstellung von planparallelen Plättchen, bei denen Trennmittel aus der Gruppe, bestehend aus organischen Polymeren, Aromaten und/oder Heterocyclen, ausgewählt werden.

Aufgabe der vorliegenden Erfindung ist es, metallische Effektpigmente bereitzustellen, die neuartige dunkle bis schwarze Farbeffekte zeigen. Sie sollten einen schwarzen Eindruck und gleichzeitig hohen Glanz und Helligkeitsflop vermitteln.

Weiterhin ist es Aufgabe der Erfindung, ein Verfahren zur Herstellung dieser Pigmente zu finden.

Die Aufgabe wird gelöst durch Bereitstellung eines metallischen Effektpigmentes gemäß Anspruch 1.

Ferner wird die Aufgabe gelöst durch ein Verfahren zur Herstellung eines metallischen Effektpigmentes, nach einem der Ansprüchs 1 bis 8, welches folgende Schritte umfasst:

a) Bedampfen eines Substrates in einer Vakuumkammer mittels physical vapour deposition (PVD, physikalische Dampfabscheidung) mit wenigstens einem Metall M in Gegenwart von Sauerstoff unter Bildung einer metallischen Schicht auf dem Substrat mit einer weitgehend homogenen chemischen Zusammensetzung, die einen durchschnittlichen Gehalt an Sauerstoff von 25 bis 58 Atom-%, bezogen auf den Gesamtgehalt an M und Sauerstoff, umfasst
b) Ablösen der metallischen Schicht vom Substrat,
c) Zerkleinern der metallischen Schicht zu Effektpigmenten,
d) optional Überführen der metallischen Effektpigmente in eine Dispersion oder Paste.

Mit Effektpigmenten beschichtete Gegenstände weisen immer einen optischen Eindruck auf, der vom Beobachtungs- und/oder Einfallswinkel abhängt. Typisch für Metalleffektpigmente ist neben dem hohen Glanz u.a. der sogenannte Holligkeitsflop, d.h. eine Verringerung der Helligkeit vom Glanzwinkel hin zu steileren Einfalls- und/oder Beobachtungswinkeln. Bei hochglänzenden Beschichtungen wird möglichst viel des einfallenden Lichtes gerichtet reflektiert und dementsprechend nur ein geringer Anteil diffus gestreut.

Bei einer schwarzen Beschichtung hingegen wird das sichtbare Licht weitgehend gleichmäßig absorbiert und nur ein sehr geringer Anteil überhaupt reflektiert. Demzufolge müssen bei einer hochglänzenden schwarzen Beschichtung an die gerichtete Reflexion höchste Anforderungen gestellt werden. Dies wird in der Praxis vor allem durch sehr glatte Oberflächen und transparente Pigmente erreicht Der Eindruck eines hochglänzenden schwarzen Klavierlackes ist im wesentlichen auf die in vielen Arbeitsschritten extrem glatt geschliffene Holzoberfläche zurückzuführen.

Im industriellen Bereich können aus Kostengründen die Untergründe nicht derart aufwändig vorbereitet werden. Hier werden edle schwarze Beschichtungen meist durch schwarze Pigmente, wie beispielsweise Ruß, mit einer geringen Beimischung an Metalleffektpigmenten erhalten.

Bei der Suche nach neuen schwarzen Effektpigmenten besteht höchstes Interesse an Pigmenten, die einen schwarzen und zudem metallischen Eindruck, wie beispielsweise einen metallischen Flop, vermitteln. Ferner sind sollten sie bevorzugt einen Blaustich besitzen. Die bekannten schwarzen Beschichtungen weisen oft bei sehr flachen Einfalls- und/oder Beobachtungswinkeln einen unerwünschten Braunstich auf.

Es hat sich nun völlig überraschend gezeigt, dass neuartige dunkle metallische Effektpigmente mit einem bisher nicht erreichbaren Flopverhalten erhalten werden können, wenn sie eine weitgehend homogene chemische Zusammensetzung aus mindestens einem Metall M besitzen, welche ein Metall oder mehrere Metalle M und einen durchschnittlichen Gehalt an Sauerstoff von 25 bis 58 Atom-%, bezogen auf den Gesamtgehalt an M und Sauerstoff, umfassen. Die Pigmente werden vorzugsweise durch PVD-Verfahren hergestellt, wodurch äußerst glatte Oberflächen erhalten werden können.

Es handelt sich somit um Effektpigmente mit einer einzigen optisch wirksamen Schicht, d.h. nicht um herkömmliche Pigmente, bei denen der optische Effekt durch Zusammenwirken verschiedener Schichten in einem Schichtaufbau hervorgerufen wird. Zur Erzielung des dunklen, bevorzugt schwarzen Farbeindruckes sind mithin keine klassischen Interferenzschichten nötig.

Bei einer bevorzugten Ausführungsform beträgt der durchschnittliche Gehalt an Sauerstoff vorzugsweise 30 bis 58 Atom-%, weiter bevorzugt 30 bis 57 Atom-% , weiter besonders bevorzugt 35 bis 56 Atom-%, und besonders bevorzugt 40 bis 55 Atom-%, jeweils bezogen auf den Gesamtgehalt an M und Sauerstoff. Die gemessenen Werte sind Mittelwerte über die gesamte Pigmentdicke und über verschiedene Pigmente. Lokal kann die Sauerstoffkonzentration durchaus davon abweichen. Insbesondere an der Pigmentoberfläche kann sie aufgrund der Bildung einer natürlichen Oxidschicht des Metalls größer sein. Diese wird jedoch in der Regel lediglich einen Bereich von einigen wenigen Nanometer umfassen und ist keine im Sinne der Erfindung optische wirksame Schicht.

Der dunkle Farbeindruck der erfindungsgemäßen Pigmente konnte weder unterhalb eines Sauerstoffgehaltes von 25 Atom-% noch oberhalb von 58 Atom-% erhalten werden. Unterhalb von 25 Atom-% Sauerstoff hat das Effektpigment offenbar einen hinsichtlich seiner optischen Eigenschaften weitgehend metallischen Charakter, bei dem weitgehend die Eigenfarbe des Metall erscheint. Oberhalb von 58 Gew.-% Sauerstoffanteil hingegen verlieren die Pigmente ihren metallischen Charakter und erhalten einen weitgehend oxidischen Charakter, wodurch sie weitgehend transparent werden.

Es handelt sich bei den erfindungsgemäßen Effektpigmenten jedoch keineswegs um reine, stöchiometrische Metalloxide. Die Pigmente haben hinsichtlich ihrer optischen Eigenschaften vielmehr überraschenderweise einen metallischen, Charakter. Dies beinhaltet die typische, sehr starke Absorption elektromagnetischer Strahlung im Bereich des Infraroten, sichtbaren und UV-Anteils. Hiermit verbunden ist das typische hohe Deckvermögen, metallischer Glanz und völlig überraschenderweise ein extrem hoher Helligkeitsflop. Der hohe Sauerstoffgehalt ist vermutlich auf die Bildung von Oxiden und/oder Suboxiden zurückzuführen. Es ist jedoch durchaus offen, welchen molekularen Aufbau die Pigmente besitzen. Sie können als unterstöchiometrisches Oxid vorliegen oder Mischung aus Metall und Oxid. Bevorzugt handelt es sich um eine Art "metallische Gläser". Die erfindungsgemäßen Pigmente können auch als "metallische Gläser" bezeichnet werden, da sie einen Röntgen-amorphen Charakter, wie er mittels Rötgendiffraktometrie festgestellt werden kann, aufweisen können.

Hinsichtlich ihrer mechanischen Eigenschaften verhalten sich die erfindungsgemäßen Effektpigmente jedoch eher spröde, vergleichbar mit Oxiden oder Gläsern.

Im Vergleich zu den bekannten PVD-Metallpigmenten besitzen sie damit anwendungstechnische Vorteile. PVD-Metallpigmente neigen aufgrund ihrer Dünnheit und der Duktilität des Metalls dazu, sich aufzurollen. Sie können sich aufgrund ihrer Flexibilität zwar hervorragend an einen Untergrund "anschmiegen", jedoch kann in einer Applikation nach Aushärtung des Bindemittels immer ein kleiner Anteil der Pigmente verformt, im Extremfall gar "aufgerollt" sein. Mit diesem Phänomen gehen Verluste der optischen Qualität einher. Ferner sind sie mechanisch labil, was sich beispielsweise in einer Empfindlichkeit gegenüber der Einwirkung starker Scherkräfte äußert. In der WO 99/35194 sind metallische PVD-Pigmente beschrieben, die zur Verbesserung ihrer mechanischen Eigenschaften beidseitige Stützschichten aus einem Dielektrikum, wie beispielsweise $SiO_2$, tragen. Die Dielektrikaschichten werden ebenfalls durch PVD-Verfahren auf die Metallschicht aufgebracht. Dies ist ein sehr umständliches Verfahren, wobei die Wirtschaftlichkeit insbesondere darunter leidet, dass Metalloxidschichten wesentlich langsamer verdampft werden können als Metallschichten.

Bei den erfindungsgemäßen Effektpigmenten ist die gewünschte mechanische Steifheit bereits in einer Schicht realisiert. Die Pigmente rollen sich nicht auf und zeigen entlang ihrer Längsausdehnung ein sehr homogenes Erscheinungsbild mit glatten Oberflächen ohne Wellen oder Ausbeulungen.

Weiterhin wirkt sich die mechanische Stabilität vorteilhaft bei der Herstellung der erfindungsgemäßen Pigmente aus, da die Zerkleinerung der metallischen Schichten zu Pigmenten erheblich erleichtert wird.

Das Metall M wird aus der Gruppe, bestehend aus Aluminium, Chrom, deren Mischungen und deren Legierungen, ausgewählt. Mit den vorgenannten Metallen konnten die beobachteten dunklen Eigenschaften erhalten werden. Besonders bevorzugt sind hierbei Aluminium und dessen Legierungen sowie Chrom.

Der Gesamtgehalt an dem Metall M und an Sauerstoff am erfindungsgemäßen Effektpigment beträgt 90 bis 100 Atom-%, bevorzugt 95 bis 100% und besonders bevorzugt 98 bis 100 Atom-%. Die restlichen Anteile können von anderen Metallen oder auch Silizium stammen, wie sie typischerweise etwa in den technischen Reinheiten den Metalls M enthalten sein können. Es kann sich jedoch auch um Nichtmetalle, wie beispielsweise Stickstoff, Bor, Kohlenstoff (Carbid), Wasserstoff und/oder Schwefel handeln.

Die vorgenannten Angaben in Atom-% beziehen sich dabei auf das Effektpigment ohne etwaige Nachbeschichtungen, die beispielsweise zur Erhöhung der Korrosionsbeständigkeit, aufgebracht werden können.

Der Sauerstoffgehalt lässt sich durch verschiedene Methoden ermitteln. Bevorzugt wird er mittels EDX-Analyse (energy dispersive X-ray analysis) bestimmt. Vorzugsweise verwendet man hier ein Gerät, welches in ein Elektronenmikroskop integriert ist, beispielsweise das EDAX Genisis, Version 3.60, Fa. EDAX.

Das Analyseverfahren wird im folgenden erläutert:

Bei der EDX-Analysemethode dringt der abbildende Elektronenstrahl des Elektronenmikroskops, abhängig von seiner Energie und dem Material, ein Stück weit in die Probenoberfläche ein und gibt seine Energie an die dort befindlichen Atome ab. Aufgrund der hohen Energie der Strahlelektronen werden Elektronen aus den kernnahen Schalen (K- oder L-Schale) der angeregten Atome herausgeschlagen. Bei diesem Vorgang entsteht durch zweierlei Mechanismen Röntgenstrahlung. Die starke Abbremsung der Elektronen erzeugt eine kontinuierlich verteilte Röntgenstrahlung, die Bremsstrahlung, und die Wiederauffüllung der Schalen erzeugt ein diskretes Röntgenspektrum, das charakteristische Linienspektrum des Atoms. Anhand dieser Linienspektren lassen sich die Elemente eindeutig identifizieren.

Das von der zu untersuchenden Probe emittierte Röntgenstrahlungsspektrum wird mittels eines energiedispersiven Röntgenspektrometers gemessen. Es besteht aus dem Bremsstrahlungsuntergrund und einer Reihe von Röntgenspektrallinien. Anhand der Lage der Linien können die emittierenden Elemente bestimmt werden, die Höhe der Linien ist ein Maß für ihre relativen Gehalte in der Probe.

Bei der EDX - Elementanalyse sind für eine korrekte Messung der Elementgehalte einige wichtige Randbedingungen zu beachten. Die zu untersuchenden Proben müssen

a) in ihrer Zusammensetzung homogen sein,
b) sie müssen so dick sein, dass der abbildende Elektronenstrahl vollständig in der Probe absorbiert wird und
c) dem Elektronenstrahl ohne störende Einflüsse einer Matrix und/oder eines Untergrundes frei zugänglich sein.

Je höher die Ordnungszahl der Elemente ist, desto stärker sind auch die kemnahen Elektronen gebunden. Die zur Ionisation erforderliche Energie steigt daher mit der Ordnungszahl an. Die kinetische Energie des Elektronenstrahls muß an die zu analysierenden Elemente angepasst werden. Die Eindringtiefe des Elektronenstrahls in das zu untersuchende Material hängt jedoch von seiner Energie ab. Der Elektronenstrahl dringt in die Probe in einer Intensitätsverteilung, die eine bimenförmige Struktur aufweist, ein ("Anregungsbirne"). Das ist bei der Analyse dünner Schichten zu beachten, da sie von hochenergetischen Elektronen leicht durchschlagen werden. Sollen dünne Schichten (Bereich unter 250 nm) vermessen werden, darf die kinetische Energie nur wenige KeV betragen. Daher muß konsequenterweise bei schwereren Elementen auf die Anregung der höheren Schalen ausgewichen werden. Die Analyse muß dann über die Auswertung der L- oder M-Linien der Elemente erfolgen.

Im einzelnen geht man bei der Analyse dünnschichtiger, plättchenförmiger Pigmente folgendermaßen vor:

Die EDX - Meßeinheit muß vor der Analyse mit Hilfe geeigneter, kommerziell erhältlicher Standards kalibriert werden.

Mittels elektronenmikroskopischer Abbildungen ist die Schichtstärke der zu untersuchenden Schicht zu bestimmen. Eine Elementaranalyse bei höherer Spannung (ca 10 bis 20 kV) gibt Aufschluß über alle in der untersuchten Probe vorhandenen Elemente sowie zusätzlich über weitere im darunter liegenden Substrat befindliche Elemente. Anhand der Stärke und der Elementzusammensetzung der Schicht wird mit Hilfe einer Monte-Carlo-Simulation (Programm: EDAX Flight-E, Version 3.1-E) die Elektronenenergie ermittelt, bei der das Schichtvolumen vom eindringenden Elektronenstrahl vollständig ausgefüllt, aber noch nicht durchschlagen wird. In diesem Fall hat die Anregungsbirne das größte Volumen.

Im nächsten Schritt ist zu ermitteln, ob und wenn ja welche Röntgenlinien bei dieser Strahlenenergie angeregt werden. Eventuell muß die kinetische Anregungsenergie noch etwas an die Spektrallinien angepasst werden.

Eine erste Probemessung mit den so ermittelten Parametern ist durchzuführen und zu analysieren. Sind im Spektrum Röntgenlinien von Substratelementen zu erkennen, so ist die eingestellte Strahlenenergie zu hoch und muß korrigiert werden.

Nun werden mehrere Messungen an der Schicht mit schrittweise steigender Strahlenspannung durchgeführt und ausgewertet. Die ermittelten Elementgehalte sollten nur geringfügig schwanken. Wenn der Anteil leichter Elemente in der Analyse mit steigender Spannung merkbar abzufallen beginnt, ist die Strahlenenergie zu hoch und muß verringert werden.

Mit den so ermittelten optimalen Parametern werden an mehreren Stellen der Schicht Messungen durchgeführt und die Elementgehalte ermittelt. Die Messergebnisse sind auf Plausibilität zu prüfen und die Streuung der Messwerte sollte nicht mehr als ca. 5 % betragen.

Eine andere Methode zur Ermittlung des Sauerstoffgehaltes ist die ESCA-Methode (electron spectroscopy for chemical analysis) oder die Auger-Spektroskopie jeweils in Kombination mit Sputterverfahren. Hier kann auch ein Tiefenprofil der Elementzusammensetzung entlang der Dicke des Effektpigmentes erstellt werden. Damit kann zwischen dem Sauerstoffgehalt der Oberfläche und des Pigmentinneren differenziert werden.

Im Allgemeinen liefern beide Methoden gut übereinstimmende Werte. Sollten die Werte jedoch nicht übereinstimmen und beispielsweise mehr als 10 % voneinander abweichen, so ist im Zweifellsfall die EDX-Methode vorzuziehen.

Die durchschnittliche geometrische Dicke der erfindungsgemäßen metallischen Effektpigmente beträgt vorzugsweise 25 bis 250 nm, bevorzugt 30 bis 200 nm, besonders bevorzugt 40 bis 150 nm und ganz besonders bevorzugt 50 bis 130 nm.

Unterhalb von 25 nm Schichtdicke sind die Pigmente zu transparent und mechanisch zu empfindlich. Oberhalb einer Schichtdicke von 250 nm wird die Deckung immer schlechter und es ergeben sich keinerlei Vorteile. Außerdem wird bei der bevorzugten Herstellung durch PVD-Verfahren der Herstellungsprozeß immer unwirtschaftlicher. Die durchschnittliche Dicke kann durch Auszählung einer genügend großen Stichprobe (mindestens 20 Pigmentteilchen) einer geeignet präparierten Probe mittels eines REM-Gerätes ermittelt werden.

Bei Pigmenten ab einer Schichtdicke von ca. 100 nm kann auch die Spreitwertmethode, zur Ermittlung der Schichtdicken herangezogen werden. Dies kann beispielsweise in Anlehnung an die in Th. Rehner und: Klimits; farbe + lack 62 (1956(10)) S. 464 oder Th. Rehner farbe + lack 71 (1965(8)) S. 649 oder in der DE 103 15 775 A1 beschriebenen Verfahren für sehr dünne Pigmente geschehen. Hierzu ist allerdings die Dichte der Proben gesondert zu ermitteln, beispielsweise mit Hilfe der He-Pyknometrie.

Die erfindungsgemäßen Effektpigmente sind stets plättchenförmig. Ihre Längsausdehnung, ausgedrückt durch den $D_{50}$-Wert der Summendurchgangsverteilung, liegt in den üblichen Bereichen von 2 bis 250 $\mu$m, bevorzugt von 5 bis 150 $\mu$m und besonders bevorzugt von 7 bis 50 $\mu$m. Gemessen wird die Größenverteilung üblicherweise durch Laserbeugungsmethoden.

Die erfindungsgemäßen metallische Effektpigmente weisen Formfaktoren von 40 bis 1500, bevorzugt von bis 180 bis 1000 und besonders bevorzugt von 200 bis 500 auf. Der Formfaktor ist definiert als das Verhältnis des $d_{50}$-Wertes der Summendurchgangskurve der Größenverteilung zur mittleren Dicke der plättchenförmigen Pigmente.

Die erfindungsgemäßen Effektpigmente weisen überraschenderweise einen außerordentlich hohen Helligkeitsflop auf. Dieser kann anhand von Rakelabzügen bestimmt werden. Die Rakelabzüge werden durchgeführt in vorzugsweise konventionellen, d.h. wasserfreien Lacksystemen ohne Zusatz weiterer Effekt- und/oder Farbpigmente oder Mattierungsmittel. Besonders bevorzugt verwendet man Nitrolacke, wie beispielsweise der kommerziell erhältliche Nitrolack Dr. Renger Erco Bronzemischlack 2615e; Fa. Morton. Die Konzentration des Effektpigmentes sollte hoch genug sein, um einen deckenden Rakelabzug zu erhalten und liegt, in Abhängigkeit von der Art des Metalls, des Metallgehaltes und der Schichtdicke bei 1-8 Gew.-%.

Von diesen Rakelabzügen werden die Helligkeitswerte und der Flopwert im Rahmen des CieLab-Farbsystems ermittelt. Man misst die Helligkeiten mit einem Mehrwinkelfarbmessgerät, beispielsweise einem Goniospektralphotometer der Fa. Optronic Multiflash, Berlin, bei einem konstanten Einfallswinkel von 45° bei verschiedenen Beobachtungswinkeln relativ zum Glanzwinkel und bestimmt die L*-Werte. Insbesondere sind die Beobachtungswinkel bei 15°, 25°, 45° und 110° relevant.

Der Helligkeitsflop ist dabei von DuPont nach folgender Formel festgelegt (A.B.J. Rodriguez, JOCCA, (1992 (4)) S. 150 - 153):

$$Flopindex = 2{,}69 \times \frac{(L^*_{15^\circ} - L^*_{110^\circ})^{1{,}11}}{(L^*_{45^\circ})^{0{,}86}}$$

Die Flopwerte der erfindungsgemäßen Effektpigmente liegen im Bereich von 23 bis 55, bevorzugt bei 25 bis 50 und besonders bevorzugt bei 30 bis 45.

Die Pigmente erscheinen nahe dem Glanzwinkel noch relativ hell, vergleichbar mit durch konventionelle Mahlverfahren hergestellte Aluminiumpigmente. Bei steileren Beobachtungswinkeln fallen die Helligkeitswerte jedoch sehr schnell ab und erreichen bei 45° bereits Werte, die nahe an schwarzen Beschichtungen heranreichen. Dadurch ergeben sich derart außerordentlich hohe Flopwerte.

Von hochglänzenden Aluminiumpigmenten, die durch PVD-Verfahren gewonnen werden, und die die bislang brillantesten Effektpigmente darstellen, sind in entsprechenden Applikationen hingegen Flopwerte im Bereich von 20 bis ca. 30 bekannt.

Somit liegen die Flopwerte der erfindungsgemäßen Effektpigmente im allgemeinen deutlich höher, überlappen sich jedoch teilweise mit aus dem Stand der Technik bekannten Pigmenten. Daher werden zur weiteren Charakterisierung als Maßzahl die Helligkeiten $L^*_{45^\circ}$ herangezogen. Die $L^*_{45^\circ}$ -Werte der erfindungsgemäßen Effektpigmente liegen im Bereich von 6 bis 30, bevorzugt von 7 bis 25 und besonders bevorzugt von 8 bis 20 Helligkeitseinheiten. Diese sehr geringen Werte untermauern den starken Flop ins Dunkle. Bekannte metallische PVD-Pigmente besitzen $L^*_{45^\circ}$ -Werte von über 35.

Bei einer bevorzugten Ausführungsform besteht das Metall M im wesentlichen aus Chrom und weist einen durchschnittlichen Gehalt an Sauerstoff von 40 bis 52 Atom-% und bevorzugt von 42 bis 48 Atom-%, jeweils bezogen auf den Gesamtgehalt an Chrom und Sauerstoff, auf. Diese Pigmente besitzen außerordentlich hohe Flopwerte von 35 bis 55, bevorzugt von 37 bis 45, und weisen einen leichten Blaustich auf. Die $L^*_{45^\circ}$ -Werte liegen in einem Bereich von 6 bis 25, bevorzugt von 7 bis 25 und besonders bevorzugt von 8 bis 15.

Sie besitzen außerdem hervorragende Stabilitäten in Belastungstests wie dem Schwitzwassertest nach DIN 50 017 (Kondenswasser-Konstantklimate) einschließlich der Haftfestigkeit (Gitterschnitt) nach DIN EN ISO 2409. Hervorragende Ergebnisse werden ebenfalls in UV-Betastungstests wie dem QUV-Test erhalten.

Die analytisch bestimmbaren Gehalte an löslichen Cr(IV)-Verbindungen, die toxikologische Probleme verursachen könnten, liegen weit unterhalb von 1 ppm.

Bei einer weiteren bevorzugten Ausführungsform besteht das Metall M im wesentlichen aus Aluminium und weist einen durchschnittlichen Gehalt an Sauerstoff von 35 bis 55 Atom-%, bevorzugt von 40 bis 51 Atom-% und besonders bevorzugt von 42 bis 50 Atom-%, jeweils bezogen auf den Gesamtgehalt an M und Sauerstoff, auf.

Die erfindungsgemäßen Effektpigmente verfügen über eine sehr glatte Oberfläche. Daher sind Streueffekte im Anwendungsmedium minimiert, und trotz des dunklen Farbeindrucks wird ein relativ hoher Glanz erzielt.

Um die erfindungsgemäßen Effektpigmente insbesondere für den Einsatz in Wasserlacken oder wässrigen Druckfarben zu stabilisieren, können sie optional mit einer Korrosionsschutzschicht, vorzugsweise umhüllend, beschichtet werden.

Hier sind die gängigen Methoden anwendbar wie die Behandlung mit organisch modifizierten Phosphorsäuren und/oder Phosphonsäuren und/oder deren Derivaten. Ferner kommt die Ausbildung einer Chromatierschicht in Frage, die Behandlung mit Vanadium- und/oder Molybdänverbindungen sowie die Kombination dieser Methoden. Ferner ist die Beschichtung mit Polymeren sowie mit Metalloxiden zu nennen. Die Metalloxide umfassen bevorzugt $SiO_2$, Boroxide, Aluminiumoxide und schließen deren Hydroxide und Oxidhydrate ein.

Bei einer besonders bevorzugten Ausführungsform umfasst die, vorzugsweise umhüllende, Korrosionsschutzschicht $SiO_2$. Besonders bevorzugt wird dieses nach Sol-Gel-Methoden auf das Effektpigment umhüllend aufgebracht.

Bei weiteren Ausführungsformen können die derart vor Korrosion geschützten erfindungsgemäßen Effektpigmente auch organisch-chemische Oberflächenmodifikationen, wie beispielsweise Silane, Titanate oder Aluminate besitzen. Diese können eine Kompatibilisierung an das umgebende Applikationsmedium bewirken. Beispielsweise kann eine solche organisch-chemische Nachbeschichtung eine chemische Anbindung an Bindemittel von Lacken oder Farben ermöglichen, wodurch eine kovalente Anbindung der erfindungsgemäßen Effektpigmente ermöglicht wird.

Ein Verfahren zur Herstellung der erfindungsgemäßen metallischen Effektpigmente umfasst folgende Schritte:

a) Bedampfen eines, vorzugsweise beweglichen, Substrates, das beispielsweise in Bandform vorliegen kann, in einer Vakuumkammer mittels physical vapour deposition (PVD) mit wenigstens einem Metall M in Gegenwart von Sauerstoff unter Bildung einer metallischen Schicht auf dem Substrat mit einer weitgehend homogenen chemischen Zusammensetzung, die einen durchschnittlichen Gehalt an Sauerstoff von 25 bis 58 Atom-%, bezogen auf den Gesamtgehalt an M und Sauerstoff, umfasst
b) Ablösung der metallischen Schicht vom Substrat, vorzugsweise in einem organischen Lösemittel,
c) Zerkleinerung der metallischen Schicht zu Effektpigmenten, vorzugsweise in einem organischen Lösemittel,
d) optional Überführen der metallischen Effektpigmente in eine Dispersion oder eine Paste.

Die Dispersion liegt vorzugsweise ebenfalls in einem organischen Lösemittel vor. Bei einer Variante beträgt der Anteil an organischen Lösemittel in der Dispersion mindestens 70 Gew.-%.

Die erfindungsgemäßen Effektpigmente können aber auch in konzentrierterer Form vorliegen, beispielsweise als Paste. Hierbei beträgt der Lösemittelgehalt bis zu 60 Gew.-%, bevorzugt bis zu 50 Gew.-%, bezogen auf die Metalleffektpigmentpaste.

Das Bedampfen mit Metall kann durch Elektronenstrahltechnologie oder widerstands- bzw. strahlungsbeheizte Verfahren erfolgen.

Vorzugsweise wird das Metall auf einer beweglichen Folie, von der der Metallfilm später abgelöst werden kann, in Form eines metallisch glänzenden Filmes aufgedampft. Die Helligkeit L* des Metallfilmes kann auf der Folie bestimmt werden, wobei die Helligkeit sowohl durch die Folie als auch unmittelbar auf der Oberfläche des Metallfilmes in diffuser Meßgeometrie mittels eines Farbmeßgerätes bestimmt werden kann, wobei sich diese Helligkeitswerte nicht wesentlich, unterscheiden. Die Helligkeitswerte L* liegen vorzugsweise oberhalb von 30, weiter bevorzugt oberhalb von 40, noch weiter bevorzugt oberhalb von 50.

Die Dicke der Metallschichten kann dabei durch Transmissionsmessungen kontrolliert werden. Die Transmissionen sind meist aufgrund des teilweise oxidischen Charakters der Folienschicht geringer als bei der Verdampfung reiner Metalle.

Wird statt eines Metalls M eine Legierung verwendet, so wird diese Legierung entweder aus separaten Verdampfern (Flashverdampfung, Springstrahlverdampfern o.ä.) durch simultane Kondensation der Metalle oder mittels geeigneter Verdampfungsmethoden wie beispielsweise Sputtern oder Elektronenstrahltechnologie hergestellt.

Der Sauerstoff beim Bedampfungsschritt kann durch eine Vielzahl möglicher Verfahrensvarianten zur Verfügung gestellt werden. Sie kann molekularen Sauerstoff aus atmosphärischem Sauerstoff oder auch die kontrollierte Zudosierung von Sauerstoffgas in die Vakuumkammer umfassen. Im letzteren Fall spricht man von einer reaktiven PVD-Bedampfung. Als Sauerstoffquelle kommt ebenfalls Wasser in Frage, welches noch in der Vakuumkammer vorhanden ist. Das Wasser kann dabei atmosphärischen Ursprung haben oder aus einem Wasserspeicher stammen. Als Wasserspeicher kommen beispielsweise Hydratverbindungen in Frage. Die Hydratverbindung muß hinreichend schwer flüchtig sein, um als solche nicht mit abgeschieden zu werden. Vorteilhafterweise gibt die Hydratverbindung jedoch, ggfs. unter Wärmezufuhr, Wasser ab. Weiterhin kann während der Bedampfung Wasserdampf in die Vakuumkammer kontrolliert zudosiert werden.

Ferner kann Sauerstoff aus dem vorzugsweise beweglichen Substrat, beispielsweise einer beweglichen Folie, auf die zunächst Releasecoat und anschließend das Metall aufgedampft wird, stammen. Selbstverständlich kann der Sauerstoff auch durch eine beliebige Kombination dieser Verfahrensmöglichkeiten zur Verfügung gestellt werden.

Vorzugsweise wird der Vakuumdruck bei Schritt a) relativ hoch sein. Bevorzugt liegt der Vakuumdruck bei $2 \times 10^{-4}$ bis ca. $1 \times 10^{-1}$ mbar, bevorzugt bei $5 \times 10^{-4}$ bis $1 \times 10^{-2}$ mbar und besonders bevorzugt bei $7 \times 10^{-4}$ bis $5 \times 10^{-3}$ mbar. Bei der Herstellung der im Stand der Technik bekannten PVD-Metallpigmente werden die Metalle dagegen herstellungsgemäß i.d.R. bei Vakua von $1 \times 10^{-4}$ mbar und weniger verdampft.

Das Kammervakuum ist im Einzelfall abhängig vom Volumen der Bedampfungskammer, der Bandbreit und -geschwindigkeit und der Menge (Partialdruck) der Sauerstoffquelle. Es muss am Ort der Substratbeschichtung ein geeignetes Mischungsverhältnis zwischen Metall und Sauerstoff vorhanden sein. Daher wird der Fachmann das Vakuum in geeigneter Weise regulieren.

Die erfindungsgemäß aufgedampfte Schicht aus Metall und Sauerstoff besitzt eine deutliche Sprödigkeit. Dies macht sich sehr vorteilhaft bei den Schritten b) und c) des Verfahrens bemerkbar. Die Schicht kann sehr leicht abgelöst werden und läßt sich problemlos zu Pigmenten gewünschter Größe zerkleinern. Bei der Zerkleinerung werden scharfe Bruchkanten erzeugt, was zu geringen Streueffekten an diesen Kanten und damit zu einer optimalen optischen Qualität der erfindungsgemäßen Effektpigmente beiträgt.

Die erfindungsgemäßen metallischen Effektpigmente finden Verwendung in Coatings, Lacken, Automobillacken, Pulverlacken, Druckfarben, Digitaldruckfarben, Kunststoffen oder kosmetischen Formulierungen, insbesondere in Nagellacken.

Die folgenden Beispiele beschreiben die Erfindung näher, ohne sie jedoch zu begrenzen.

**Beispiel 1:**

Das erfindungsgemäße Beispiel wurde mit einer PVD-Bandanlage erstellt (s. Figur 1). Das Kammervolumen beträgt ca. 1,5 $m^3$. Das Vakuum wird mit Hilfe zweier Vorpumpen (jeweils Firma Edwards) und einer Diffusionspumpe (Firma Varian) erzeugt.

Zur Beschichtung wurde eine 40 cm breite Polyethylenterephtalat-(PET)-Folie von 23 µm Dicke, welche mit einem Releasecoat beschichtet ist, verwendet.

Der Releasecoat besteht aus acetonlöslichem Methylmethacrylatharz und wurde in einem separaten Arbeitsschritt vorab aufgebracht.

Die Folie wurde mit einer Bandgeschwindigkeit von 0,5 m/min bewegt und hierauf Chrom durch Widerstandsbeheizung abgeschieden. Die Massenbelegung wurde mittels einer Schwingquarzmessung (Modell FTM7, Fa. Edwards) kontrolliert und die Schichtdicke über die Heizleistung und Bandgeschwindigkeit gesteuert. Während der Metallbeschichtung befanden sich mit Wasser getränkte Kartonstücke in der Vakuumkammer (Wasser-, bzw. Sauerstoffquelle). Diese wurden vor dem Evakuieren in die Kammer gelegt.

Simultan erfolgte eine Transmissionsmessung der beschichteten Folie, woraus die Schichtdicke des aufgedampften Metalls berechnet werden kann.

Der Sauerstoffpartialdruck für die jeweiligen Schichten wurde über das konstante Kammervakuum kontrolliert. Durch das Kammervakuum hingegen wurde der Sauerstoffgehalt der Metallfolie und damit auch der Pigmente variiert.

Die genauen Parameter sind Tab.1 zu entnehmen.

Nach abgeschlossener Beschichtung wurde die Vakuumkammer belüftet und die metallisierte PET-Folie entnommen. Ein kleiner Teil der beschichteten Folien wurde abgetrennt und für optische Untersuchungen beiseite gelegt. Das meiste Folienmaterial jedoch wurde in einer separaten Ablöseeinheit in Aceton dispergiert, wobei die Beschichtung von der PET-Folie abgelöst wurde.

Hierbei wurde durch Auflösen der Releasecoatschicht die Beschichtung von der Folie abgetrennt. Die abgetrennten Schichtpakete wurden abfiltriert und der entstandene Filterkuchen wurde mit Aceton vom Releasecoat vollständig gewaschen und in eine Pigmentsuspension überführt und auf die gewünschte Partikelgröße zerkleinert.

**Vergleichsbeispiel 2:**

Es wurde wie in Beispiel 1 verfahren, jedoch ohne die Anwesenheit von feuchten Kartonstücken und daher bei besserem Vakuum und geringerer Massenbelegung (vergl. Tabelle 1).

**Beispiel 3:**

Wie Beispiel 1, jedoch wurde Aluminium widerstandsbeheizt abgeschieden. Genaue Prozeßparameter s. Tabelle 1.

**Beispiel 4:**

Wie Beispiel 1, jedoch wurde Aluminium widerstandsbeheizt abgeschieden und die Bandgeschwindigkeit betrug 5 m/min. Genaue Prozeßparameter s. Tabelle 1.

**Tab.1: Prozessdaten bei der Metallabscheidung:**

| | Aufgedampfter Stoff | Kammervakuum [mbar] | Massenbelegung [$\mu g*cm^{-2}$] | Online-Transmission [%] |
|---|---|---|---|---|
| Beispiel 1 | Cr | $3,6 \times 10^{-4}$ | 67,7 | 44 |
| Vgl.-Beispiel 2 | Cr | $6,0 \times 10^{-4}$ | 25,0 | 48 |
| Beispiel 3 | Al | $1,7 \times 10^{-4}$ | 14,3 | 77 |
| Beispiel 4 | Al | $2,6 \times 10^{-4}$ | 7,2 | 70 |

**Vergleichsbeispiel 5:**

Kommerziell erhältliches PVD-Aluminiumpigment Metalure® A 41010 AE (Hersteller: Avery Dennison, Vertrieb: Fa. ECKART GmbH & Co.KG).

**EDX-Messungen**

Von allen Proben wurde die Zusammensetzung von Sauerstoff und Metall mit der oben beschriebenen Meßmethodik mittels EDX ermittelt. Die Anregungsenergie des Elektronenstrahls betrug jeweils 3 keV. Es wurden je für Sauerstoff die $K_\alpha$-Linie (Anregungsenergie: ca. 0,5 keV), für Chrom die $L_\alpha$-Linie (Anregungsenergie: ca. 0,6 keV) und für Aluminium die $K_\alpha$-Linie (Anregungsenergie: ca. 1,5 keV) angeregt. Bei den chromhaltigen Proben wurde zur Analyse die nahe beieinander liegenden Peaks mittels des geräteeigenen Softwareprogramms durch eine holographische Peak Dekonvolutionsanalyse (HDP) gefittet und entsprechend ausgewertet.

**ESCA/XPS-Messungen**

Weiterhin wurden die Pigmente mittels ESCA hinsichtlich ihrer Elementzusammensetzung und ihres Metall- und Sauerstoffgehaltes untersucht. Zur Probenpräparation wurden die Pigmente in Aceton aufgenommen und auf einem Glassträger eingetrocknet. Auf diese Weise wird eine weitgehende planparallele Orientierung der Pigmente erreicht. Die Messungen wurden mit einem Gerät der Fa. Thermo VG Scientific, Typ ESCALAB 250 durchgeführt. Für die Anregung wurde monochromatische Al $K_\alpha$ Röntgenstrahlung verwendet (15 kV, 150 W, 500 $\mu$m Spotgröße). Die Transmissionsfunktion des Gerätes wurde an einer Kupferprobe gemessen. Zur Ladungskompensation kam eine "Flood-Gun" mit einer Elektronenenergie von 6 eV/0,05 mA Strahlstrom zum Einsatz.

Es wurde zunächst ein Übersichtsspektrum (Pass-Energie: 80 eV) aufgenommen. Anschließend wurden Hochauflösungsspektren mit einer Pass-Energie von 30 eV gemessen. Die Proben wurden abgesputtert und anschließend ein Hochauflösungsspektrum gemessen. Auf diese Weise wurden Tiefenprofile der Zusammensetzung bestimmt.

Die mittleren Schichtdicken der Proben wurden durch Auszählung einer signifikanten Stichprobe (> 20 Teilchen) unter einem Raster-Elektronen-Mikroskop (REM) ermittelt. Hierbei wurden die geschätzten azimuthalen Winkel der einzelnen Pigmentteilchen relativ zur Beobachterebene geschätzt und in die Berechnung mit einbezogen. Es wurden nur Teilchen vermessen, die weitgehend senkrecht zur Beobachterebene standen.

Schließlich wurden mittels üblicher Laserbeugungsmethoden (Gerät Cilas 1064) die Größenverteilung der Partikel bestimmt und in üblicher Weise aus der Summendurchgangsverteilung der $D_{50}$-Wert als Maß für die mittlere Größe ermittelt.

**Ergebnisse:**

**Tabelle 2: Pigmenteigenschaften: Elementzusammensetzung und REM-Schichtdicke**

| Probe | $D_{50}$-Werte [$\mu$m] | REM-Schichtdicken [nm] | Gehalte in Atom-% EDX-Analyse | | | Gehalte in Atom-% ESCA/XPS-Analyse | | |
|---|---|---|---|---|---|---|---|---|
| | | | Atom-% Sauerstoff | Atom-% Metall | | Atom-Sauerstoff | Atom-% Metal | |
| | | | | Cr | Al | | Cr | Al |
| Beispiel 1 | 16 | 130 | 45 | 55 | | 45 | 55 | |

(fortgesetzt)

| Probe | $D_{50}$-Werte [µm] | REM-Schichtdicken [nm] | Gehalte in Atom-% EDX-Analyse | | | Gehalte in Atom-% ESCA/XPS-Analyse | | |
|---|---|---|---|---|---|---|---|---|
| | | | Atom-% Sauerstoff | Atom-% Metall | | Atom-Sauerstoff | Atom-% Metal | |
| | | | | Cr | Al | | Cr | Al |
| Vgl.-Beispiel 2 | 9 | 50 | 18 | 82 | | - | - | |
| Beispiel 3 | 16 | 40 | 45 | | 55 | 45 | | 55 |
| Beispiel 4 | 14 | 50 | 49 | | 51 | - | | - |
| Vgl.-Beispiel 5 | 11 | 20 | 24 | | 76 | 32 | | 68 |

Auch die Vergleichsbeispiele weisen einen relativ hohen Sauerstoffgehalt auf. Dies ist von durch PVD-Verfahren hergestellten Effektpigmenten durchaus bekannt, da während des Abscheidungsprozesses Sauerstoff, der beispielsweise aus dem Folienmaterial stammt, in gewissen Mengen in die Metallschicht eingebaut werden kann. Die erfindungsgemäßen Pigmente zeigen jedoch einen vergleichsweise deutlich höheren Sauerstoffanteil.

**Optische Eigenschaften:**

Zunächst einmal wurden von den erfindungsgemäßen Beispielen 1 und 3 - 4 sowie von Vergleichsbeispiel 2 die beschichteten Folien optisch charakterisiert. Hierzu wurden die Helligkeiten L* der beschichteten Folien in diffuser Messgeometrie (Ulbricht-Kugel) mit einem Spektralphotometer der Firma Minolta gemessen. Als Untergrund wurde die Prüfkarten Nr. 2853 der Fa. Byk Gardner (Schwarz-Weiß-Kontrastpapier) jeweils auf schwarzem bzw. weißem Untergrund verwendet. Die Folien wurden von beiden Seiten vermessen: zum einen mit der Metallseite obenauf und zum anderen mit der Folienseite obenauf. Die Beschichtungen zeigen alle relativ hohe Helligkeiten L*, was für einen verhältnismäßig hohen Glanzwert spricht. Hierbei sind die Werte für die Folie des Vergleichsbeispiels 2 am höchsten, was aufgrund des höheren Metallgehalts dieser Folie leicht zu erklären ist.

**Tab. 3: Messungen mit dem Spektralphotometer (Firma Minolta CM 508)**

| Probe | L*-Wert Metallseite Messung auf schwarzem Hintergrund | L*-wert Folienseite Messung auf schwarzem Hintergrund | L*-Wert Metallseite Messung auf weißem Hintergrund | L*-Wert Folienseite Messung auf weißem Hintergrund |
|---|---|---|---|---|
| Beispiel 1 | 54 | 52 | 53 | 55 |
| Vergleichsbeispiel 2 | 73 | 74 | 73 | 75 |
| Beispiel 3 | 60 | 68 | 62 | 70 |
| Beispiel 4 | 48 | 56 | 61 | 66 |

Das jeweilige Pigment wurde in jeweils 2 g eines konventionellen Nitrocelluloselackes (Dr. Renger Erco Bronzemischlack 2615e; Fa. Morton) eingerührt. Dabei wurde das Effektpigment vorgelegt und anschließend mit einem Pinsel in den Lack dispergiert.

Der fertige Lack wurde auf einem Rakelabzugsgerät mit einer Nassfilmdicke von 50 µm auf Prüfkarten Nr. 2853 der Fa. Byk Gardner (Schwarz-Weiß-Kontrastpapier) appliziert.

Die Pigmentierungshöhe wurde so gewählt, dass sich eine deckende Schicht ergab. Hierdurch geht in die farbmetrischen Daten der Einfluß des Untergrundes nicht ein.

Die Rakelabzüge werden farbmetrisch gemäß Herstellerangaben vermessen (Gerät Optronic Multiflash, Berlin). Dabei wird unter einem konstanten Winkel von 45° eingestrahlt und die L*-,a*- und b*-Werte bei Beobachtungswinkeln von 15°, 20°, 25°, 45°,55°, 70°, 75° und 110° relativ zum Glanzwinkel bestimmt (Lichtquelle: D65).

In Fig. 2 sind die Helligkeitswerte über verschiedene Winkel graphisch dargestellt. Außerdem wurde der Rakelkarton an einer weißen und einer schwarzen Stelle vermessen und die L*-Werte dargestellt.

Deutlich ist zu erkennen, dass die Helligkeiten der erfindungsgemäßen Beispiele bei 15° noch recht hoch sind, um dann sehr steil abzufallen. Insbesondere bei Beispiel 1 werden bei einem Beobachtungswinkel von 45° schon beinahe die geringen Helligkeiten des schwarzen Kartons erreicht und bei höheren Winkeln liegen die Werte sogar unterhalb der des schwarzen Kartons.

Die Helligkeiten der Vergleichsbeispiele sind, jeweils im Vergleich zum jeweiligen Metall, durchweg höher.

In Tabelle 4 sind die Helligkeiten bei den Beobachtungswinkeln 15°, 45° und 110° und die daraus berechneten Flopwerte nach DuPont dargestellt. Ferner wird der subjektiv empfundene Farbeindruck beschrieben.

**Tab. 4: Farbmetrische Daten der Rakelabzüge bei den erfindungsgemäßen Beispielen und der Vergleichsbeispielen**

| Probe | Pigmentierungshöhe [%] | Helligkeiten | | | Flopwert | Subjektiver Farbeindruck |
|---|---|---|---|---|---|---|
| | | L*15° | L*45° | L*110° | | |
| Beispiel 1 | 8 | 80,7 | 11,4 | 3,7 | 41,2 | Stahlblau-glänzend, seitlich: schwarz |
| Vgl.-Beispiel 2 | 4 | 110,7 | 37,9 | 17,4 | 18,4 | grau-glänzend |
| Beispiel 3 | 2 | 84,7 | 17,7 | 4,6 | 29,5 | Stahlgrau-glänzend |
| Beispiel 4 | 2 | 82,3 | 20,6 | 7,1 | 24,1 | Stahlgrau-glänzend |
| Vgl.-Beispiel 5 | 2 | 138,1 | 34,3 | 15,4 | 26,8 | Silber-glänzend |

Die Effektpigmente des erfindungsgemäßen Beispiels 1 besitzen einen enormen Flopwert von 41,2. Derart hohe Flopwerte sind für metallische Effektpigmente bisher praktisch nicht bekannt. Ferner weist die Applikation dieses Beispiels einen gewissen Blaustich auf. Derartige Effekt sind äußerst gefragt, da beispielsweise im Stand der Technik bekannte metallische Schwarzeffektlackierungen stets nachteiligerweise einen Braunstich aufweisen.

Die Effektpigmente des Vergleichsbeispiels 2 hingegen, mit einem geringeren Sauerstoffgehalt, besitzen nur einen sehr schwachen Flop. Die im Beispiel 3 hergestellte Aluminiumprobe weist einen höheren Flopwert und bei Beispiel 4 einen geringeren Flopwert im Vergleich zum reinen PVD-Aluminiumpigment (Vergleichsbeispiel 5) auf. Der große Unterschied im optischen Eindruck der erfindungsgemäßen Effektpigmente (erfindungsgemäße Beispiele) und Effektpigmente des Vergleichsbeispiels kommt jedoch in den niedrigeren Helligkeitswerten zum Ausdruck. So sind die $L^*_{45°}$-Werte der Effektpigmente der erfindungsgemäßen Beispiele zum Beispiel um mehr als 10 Einheiten niedriger als die der Effektpigmente des Vergleichsbeispiels 5.

Völlig überraschend zeigten die applizierten erfindungsgemäßen Pigmente einen sehr starken Hell-Dunkel-Flopeffekt. Insbesondere bei steiler werdenden Betrachtungswinkeln und/oder Einfallswinkeln ist ein dunkles (schwarzes) Erscheinungsbild festzustellen. Beim Vergleichsbeispiel 2 ist dieser Effekt weitaus geringer ausgeprägt.

Diese Ergebnisse sind mithin äußerst überraschend und können nicht aus den Helligkeitswerten der Folien hergeleitet werden.

## Patentansprüche

1. Metallisches Effektpigment,
**dadurch gekennzeichnet,**
**dass** das metallische Effektpigment aus einer Mischung aus Metall und Oxid besteht und eine weitgehend homogene chemische Zusammensetzung besitzt, welches wenigstens ein Metall M und einen durchschnittlichen Gehalt an Sauerstoff von 25 bis 58 Atom-%, bezogen auf den Gesamtgehalt an M und Sauerstoff, umfaßt, wobei das Metall M aus der Gruppe, die aus Aluminium, Chrom, deren Mischungen und deren Legierungen besteht, ausgewählt wird.

2. Metallisches Effektpigmente nach Anspruch 1,
**dadurch gekennzeichnet,**
**dass** das metallische Effektpigment einen durchschnittlichen Gehalt an Sauerstoff von 30 bis 57 Atom-%, bezogen auf den Gesamtgehalt an M und Sauerstoff, umfaßt.

3. Metallisches Effektpigment nach Anspruch 1 oder 2,
**dadurch gekennzeichnet,**
**dass** das metallische Effektpigment einen durchschnittlichen Gehalt an Sauerstoff von 35 bis 56 Atom-%, bezogen auf den Gesamtgehalt an M und Sauerstoff, umfaßt.

4. Metallisches Effektpigment nach einem der vorstehenden Ansprüche,
**dadurch gekennzeichnet,**
**dass** der Gesamtgehalt an M und an Sauerstoff 90 bis 100 Atom-%, bezogen auf das Effektpigment, beträgt.

5. Metallisches Effektpigment nach einem der vorstehenden Ansprüche,
**dadurch gekennzeichnet,**
**dass** das Effektpigment eine durchschnittliche Dicke von 25 bis 250 nm besitzt.

6. Metallisches Effektpigment nach einem der vorstehenden Ansprüche,
**dadurch gekennzeichnet,**
**dass** das Metall M im wesentlichen aus Chrom besteht und einen durchschnittlichen Gehalt an Sauerstoff von 35 bis 48 Atom-%, bezogen auf den Gesamtgehalt an Chrom und Sauerstoff, besitzt.

7. Metallisches Effektpigment nach einem der Ansprüche 1 bis 6,
**dadurch gekennzeichnet,**
**dass** das Metall M im wesentlichen aus Aluminium besteht und einen durchschnittlichen Gehalt an Sauerstoff von 30 bis 55 Atom-%, bezogen auf den Gesamtgehalt an Aluminium und Sauerstoff, besitzt.

8. Metallisches Effektpigment nach einem der vorstehenden Ansprüche,
**dadurch gekennzeichnet,**
**dass** das Effektpigment ein PVD-Pigment ist.

9. Metallisches Effektpigment nach einem der vorstehenden Ansprüche,
**dadurch gekennzeichnet,**
**dass** es mit einer Korrosionsschutzschicht, vorzugsweise umhüllend, beschichtet ist.

10. Metallisches Effektpigment nach Anspruch 10,
**dadurch gekennzeichnet,**
**dass** die, vorzugsweise umhüllende, Korrosionsschutzschicht $SiO_2$ umfasst oder aus $SiO_2$ besteht.

11. Verfahren zur Herstellung eines metallischen Effektpigmentes nach einem der Ansprüche 1 bis 8,
**dadurch gekennzeichnet,**
**dass** das Verfahren folgende Schritte umfasst:

a) Bedampfen eines Substrates in einer Vakuumkammer mittels physical vapour deposition (PVD) mit wenigstens einem Metall M in Gegenwart von Sauerstoff unter Bildung einer metallischen Schicht auf dem Substrat mit einer weitgehend homogenen chemischen Zusammensetzung, die einen durchschnittlichen Gehalt an Sauerstoff von 25 bis 58 Atom-%, bezogen auf den Gesamtgehalt an M und Sauerstoff, umfasst
b) Ablösen der metallischen Schicht vom Substrat,
c) Zerkleinern der metallischen Schicht zu metallischen Effektpigmenten,
d) optional Überführen der metallischen Effektpigmente in eine Dispersion oder Paste.

12. Verfahren zur Herstellung eines metallischen Effektpigmentes nach Anspruch 11,
**dadurch gekennzeichnet,**
**dass** der Sauerstoff in Form von Wasser und/oder atmosphärischem Sauerstoff in der Vakuumkammer vorhanden ist.

13. Verfahren zur Herstellung eines metallischen Effektpigmentes nach Anspruch 11,
**dadurch gekennzeichnet,**
**dass** während Schritt a) eine kontrollierte Zudosierung von Sauerstoffgas in die Vakuumkammer erfolgt.

14. Verfahren zur Herstellung eines metallischen Effektpigmentes nach Anspruch 11 bis 13,
**dadurch gekennzeichnet,**

**dass** Schritt a) bei einem Vakuumdruck von 2 x $10^{-4}$ bis 1 x $10^{-1}$ mbar durchgeführt wird.

**15.** Verfahren zur Herstellung eines metallischen Effektpigmentes nach einem der Ansprüche 11 bis 14,
**dadurch gekennzeichnet,**
**dass** Schritt b) und/oder c) in einem Lösungsmittel, vorzugsweise einem organischen Lösungsmittel, durchgeführt wird.

**16.** Verfahren zur Herstellung eines metallischen Effektpigmentes nach einem der Ansprüche 11 bis 15,
**dadurch gekennzeichnet,**
**dass** im Schritt d) die metallischen Effektpigmente in eine Dispersion, mit einem, vorzugsweise organischen, Lösungsmittel überführt werden, wobei der Gehalt an, vorzugsweise organischem, Lösungsmittel mindestens 70 Gew.-%, bezogen auf das Gesamtgewicht der Dispersion, beträgt.

**17.** Verwendung der metallischen Effektpigmente nach einem der Ansprüche 1 bis 10 in Coatings, Lacken, Automobillacken, Pulverlacken, Druckfarben, Digitaldruckfarben, Kunststoffen oder kosmetischen Formulierungen.

## Claims

**1.** Metallic effect pigment
**characterised in that**
the metallic effect pigment consists of a mixture of metal and oxide and has a substantially homogeneous chemical composition comprising at least one metal M and an average oxygen content of 25 to 58 atomic percent by reference to the total content of M and oxygen, and the metal M is selected from the group comprising aluminium, chromium, mixtures thereof and alloys thereof.

**2.** Metallic effect pigment as claimed in claim 1,
**characterised in that**
the metallic effect pigment has an average oxygen content of 30 to 57 atomic percent by reference to the total content of M and oxygen.

**3.** Metallic effect pigment as claimed in claim 1 or 2,
**characterised in that**
the metallic effect pigment has an average oxygen content of 35 to 56 atomic percent by reference to the total content of M and oxygen.

**4.** Metallic effect pigment as claimed in one of the preceding claims,
**characterised in that**
the total content of M and oxygen is 90 to 100 atomic percent by reference to the effect pigment.

**5.** Metallic effect pigment as claimed in one of the preceding claims,
**characterised in that**
the effect pigment has an average thickness of 25 to 250 nm.

**6.** Metallic effect pigment as claimed in one of the preceding claims,
**characterised in that**
the metal M is essentially chromium and has an average oxygen content of 35 to 48 atomic percent by reference to the total content of chromium and oxygen.

**7.** Metallic effect pigment as claimed in one of the preceding claims,
**characterised in that**
the metal M is essentially aluminium and has an average oxygen content of 30 to 55 atomic percent by reference to the total content of aluminium and oxygen.

**8.** Metallic effect pigment as claimed in one of the preceding claims,
**characterised in that**
the effect pigment is a PVD pigment.

9. Metallic effect pigment as claimed in one of the preceding claims,
**characterised in that**
it is coated with, preferably encased in, an anti-corrosion layer.

10. Metallic effect pigment as claimed in claim 10,
**characterised in that**
the preferably encased anti-corrosion layer contains $SiO_2$ or is $SiO_2$.

11. Method of producing a metallic effect pigment as claimed in one of claims 1 to 8,
**characterised in that**
the method comprises the following steps:

a) depositing at least one metal M on a substrate in a vacuum chamber by means of physical vapour deposition (PVD) in the presence of oxygen to form a metallic layer on the substrate with a substantially homogeneous chemical composition comprising an average oxygen content of 25 to 58 atom ic percent by reference to the total content of M and oxygen,
b) detaching the metallic layer from the substrate,
c) grinding the metallic layer to form metallic effect pigments,
d) optionally converting the metallic effect pigments into a dispersion or paste.

12. Method of producing a metallic effect pigment as claimed in claim 11,
**characterised in that**
the oxygen is present in the form of water and/or atmospheric oxygen in the vacuum chamber.

13. Method of producing a metallic effect pigment as claimed in claim 11,
**characterised in that**
oxygen gas is metered into the vacuum chamber in a controlled manner during step a).

14. Method of producing a metallic effect pigment as claimed in claims 11 to 13,
**characterised in that**
step a) is conducted at a vacuum pressure of $2 \times 10^{-4}$ to $1 \times 10^{-1}$ mbar.

15. Method of producing a metallic effect pigment as claimed in one of claims 11 to 14,
**characterised in that**
step b) and/or step c) is conducted in a solvent, preferably an organic solvent.

16. Method of producing a metallic effect pigment as claimed in one of claims 11 to 15,
**characterised in that**
the metallic effect pigments are converted into a dispersion with a preferably organic solvent in step d), and the content of preferably organic solvent is at least 70 % by weight by reference to the total weight of the dispersion.

17. Use of the metallic effect pigments as claimed in one of claims 1 to 10 in coatings, varnishes, car paints, powder coatings, printing inks, digital printing inks, plastics or cosmetic formulations.

## Revendications

1. Pigment à effet métallique, **caractérisé en ce que** le pigment à effet métallique est constitué d'un mélange d'un métal et d'un oxyde, possède une composition chimique essentiellement homogène, qui comprend au moins un métal M et présente une teneur moyenne en oxygène de 25 à 58 % en atomes par rapport à la quantité totale de M et d'oxygène, le métal M étant choisi dans le groupe constitué de l'aluminium, du chrome, des mélanges et des alliages de ceux-ci.

2. Pigment à effet métallique selon la revendication 1, **caractérisé en ce que** le pigment à effet métallique a une teneur moyenne en oxygène de 30 à 57 % en atomes, par rapport à la quantité totale de M et d'oxygène.

3. Pigment à effet métallique selon la revendication 1 ou 2, **caractérisé en ce que** le pigment à effet métallique a une teneur moyenne en oxygène de 35 à 56 % en atomes par rapport à la quantité totale de M et d'oxygène.

**4.** Pigment à effet métallique selon l'une des revendications précédentes, **caractérisé en ce que** la teneur totale en M et en oxygène est de 90 à 100 % en atomes par rapport au pigment à effet.

**5.** Pigment à effet métallique selon l'une des revendications précédentes, **caractérisé en ce que** le pigment à effet a une épaisseur moyenne de 25 à 250 nm.

**6.** Pigment à effet métallique selon l'une des revendications précédentes, **caractérisé en ce que** le métal M est constitué essentiellement de chrome et a une teneur moyenne en oxygène de 35 à 48 % en atomes par rapport à la quantité totale de chrome et d'oxygène.

**7.** Pigment à effet métallique selon l'une des revendications 1 à 6, **caractérisé en ce que** le métal M est pour l'essentiel constitué d'aluminium, et a une teneur moyenne en oxygène de 30 à 55 % en atomes par rapport à la quantité totale d'aluminium et d'oxygène.

**8.** Pigment à effet métallique selon l'une des revendications précédentes, **caractérisé en ce que** le pigment à effet est un pigment PVD.

**9.** Pigment à effet métallique selon l'une des revendications précédentes, **caractérisé en ce qu'**il est revêtu d'une couche de protection anticorrosion, de préférence enveloppante.

**10.** Pigment à effet métallique selon la revendication 10, **caractérisé en ce que** la couche de protection anticorrosion de préférence enveloppante comprend du $SiO_2$ ou est constituée de $SiO_2$.

**11.** Procédé de fabrication d'un pigment à effet métallique selon l'une des revendications 1 à 8, **caractérisé en ce que** le procédé comprend les étapes suivantes :

a) application sur un substrat, dans une chambre à vide, par un procédé de dépôt physique en phase vapeur (PVD), d'au moins un métal M en présence d'oxygène, avec formation d'une couche métallique sur le substrat, ayant une composition chimique essentiellement homogène, qui a une teneur moyenne en oxygène de 25 à 58 % en atomes par rapport à la quantité totale de M et d'oxygène,
b) détachement de la couche métallique d'avec le substrat,
c) broyage de la couche métallique pour obtenir des pigments à effet métallique,
d) en option, transfert des pigments à effet métallique dans une dispersion ou une pâte.

**12.** Procédé de fabrication d'un pigment à effet métallique selon la revendication 11, **caractérisé en ce que** l'oxygène est présent dans la chambre à vide sous forme d'eau et/ou d'oxygène atmosphérique.

**13.** Procédé de fabrication d'un pigment à effet métallique selon la revendication 11, **caractérisé en ce que**, pendant l'étape a), on procède à une introduction contrôlée d'oxygène gazeux dans la chambre à vide.

**14.** Procédé de fabrication d'un pigment à effet métallique selon les revendications 11 à 13, **caractérisé en ce que** l'étape a) est mise en oeuvre sous un vide de $2 \times 10^{-4}$ à $1 \times 10^{-1}$ mbar.

**15.** Procédé de fabrication d'un pigment à effet métallique selon l'une des revendications 11 à 14, **caractérisé en ce que** l'étape b) et/ou l'étape c) sont mises en oeuvre dans un solvant, de préférence un solvant organique.

**16.** Procédé de fabrication d'un pigment à effet métallique selon l'une des revendications 11 à 15, **caractérisé en ce que**, dans l'étape d), les pigments à effet métallique sont transférés dans une dispersion à l'aide d'un solvant, de préférence organique, la teneur en solvant de préférence organique étant d'au moins 70 % en poids par rapport au poids total de la dispersion.

**17.** Utilisation des pigments à effet métallique selon l'une des revendications 1 à 10 dans des peintures, des vernis, des vernis pour carrosserie automobile, des peintures en poudre, des encres d'imprimerie, des encres pour impression numérique, des matières plastiques et des formulations cosmétiques.

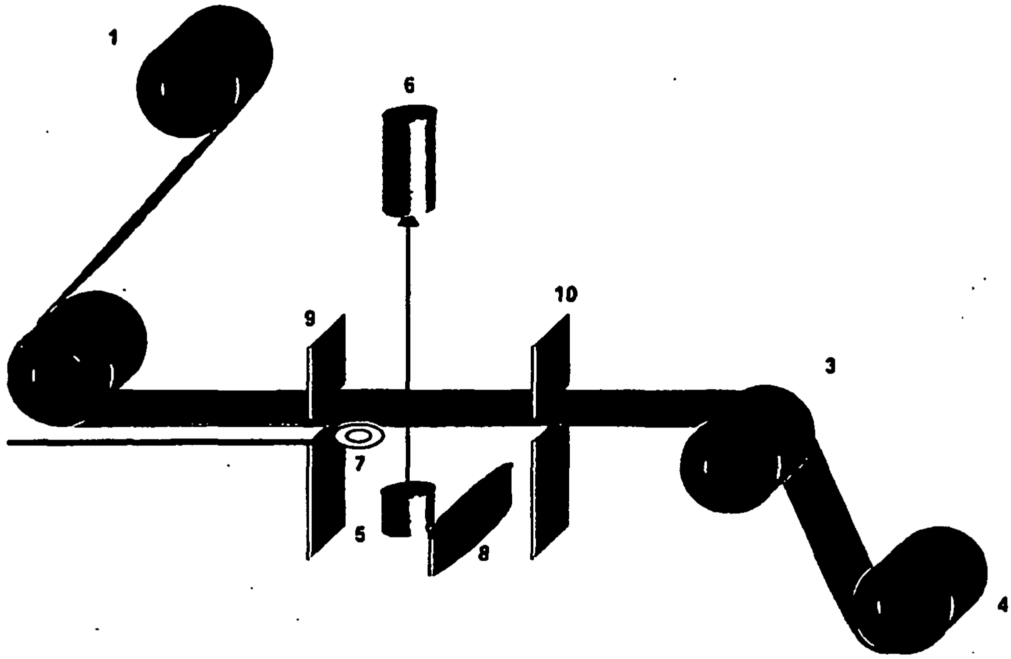


Abbildung 1 Schematische Darstellung der Bandanlage

1. Mit Releasecoat beschichtete Quellrolle
2. und 3. Umlenkrolle
4. Rollenaufnehmer
5. und 6. Transmissionsmessung
7. Schwingquarzmessung
8. Verdampferschiff
9. und 10. Blendeneingang und Blendenausgang

Abb. 2: Farbmessung: L*-Werte
(Messungen im Rakelabzug unter verschiedenen Differenzenwinkeln von 15° bis 110°)

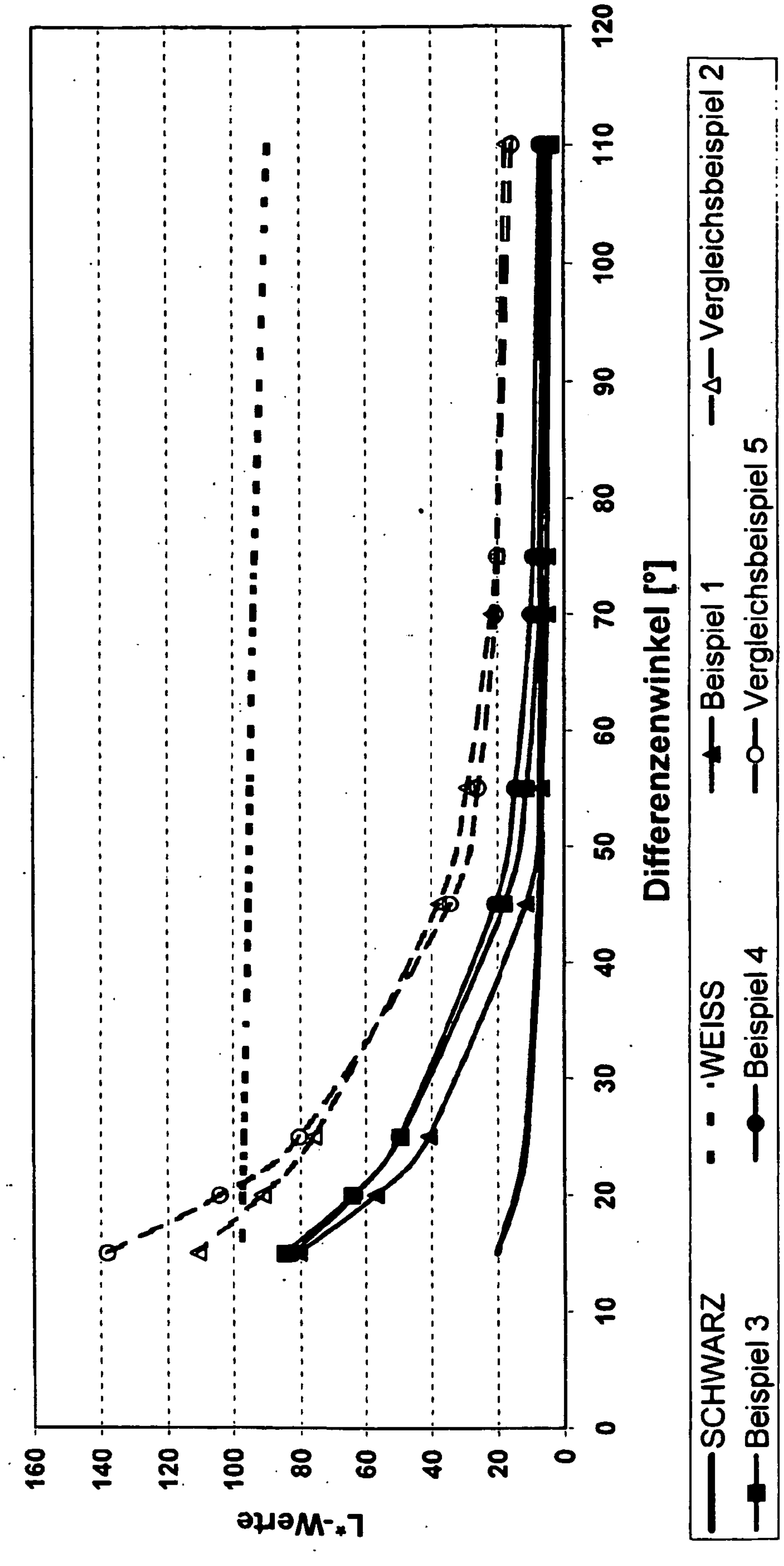

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2839378 A
- US 2941894 A
- US 4321087 A
- US 9924782 W
- US 0214161 W
- US 0238292 W
- WO 2004026971 A
- WO 2004026972 A
- DE 10346167 A1
- EP 1522606 A1
- WO 2005064035 A1
- US 20010036056 A1
- FR 2151636
- US 3078149 A
- DE 10151375 A1
- WO 9935194 A
- DE 10315775 A1


### In der Beschreibung aufgeführte Nicht-Patentliteratur


- **TH. REHNER ; KLIMITS.** *farbe + lack,* 1956, vol. 62 (10), 464
- **TH. REHNER.** *farbe + lack,* 1965, vol. 71 (8), 649
- **A.B.J. RODRIGUEZ.** *JOCCA,* 1992, 150-153